(19) Europäisches Patentamt

European Patent Office

Office européen des brevets

(11) **EP 1 710 588 A2**

(12) **EUROPEAN PATENT APPLICATION**

(43) Date of publication:
**11.10.2006 Bulletin 2006/41**

(51) Int Cl.:
*G01P 3/44* (2006.01)　　*G01P 15/18* (2006.01)
*G01L 5/00* (2006.01)　　*B60T 8/175* (2006.01)

(21) Application number: **06007365.7**

(22) Date of filing: **07.04.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.04.2005 JP 2005111594**

(71) Applicant: **JTEKT CORPORATION**
**Chuo-ku**
**Osaka-shi**
**Osaka 542-8502 (JP)**

(72) Inventors:
• **Sentoku, Minoru**
**Osaka-shi**
**Osaka 542-8502 (JP)**
• **Iino, Takeo**
**Osaka-shi**
**Osaka 542-8502 (JP)**

(74) Representative: **Steinmeister, Helmut**
**Patentanwälte**
**TER MEER STEINMEISTER & PARTNER GbR**
**Artur-Ladebeck-Strasse 51**
**33617 Bielefeld (DE)**

(54) **Sensor and rolling bearing equiped with such a sensor**

(57)　　A sensor apparatus (2) includes an acceleration sensor (11) provided in a vehicle body side raceway member (3) and detecting a lateral G, and a processing means (31) for computing a load by using an output of the acceleration sensor (11). The processing means (31) determines a lateral load Fy, a vertical load Fz, and a moment Mx caused by the lateral load on the basis of an output G of the acceleration sensor (11) in accordance with the following expression:

$$Fy = Mx \div a,$$

$$Fz = b \times G + c,$$

and

$$Mx = d \times G^2 + e \times G + f,$$

where a, b, c, d, e, and f respectively denote constants unique to a load detection target that is provided with the sensor apparatus.

Fig. 1

**Description**

BACKGROUND OF THE INVENTION

The present invention relates to a sensor apparatus for determining a load applied to a rolling bearing apparatus or the like, and to a rolling bearing apparatus obtained by integrating a rolling bearing apparatus as a constituting element of a motor vehicle and a sensor apparatus that detect various information thereof.

In the motor vehicle, in order to execute a control for improving a stability thereof, there is employed a vehicle control system provided with a hub unit with a plurality of sensors (a rolling bearing apparatus with sensors) to which a sensor apparatus detecting various information of the vehicle is attached, and a control apparatus controlling the vehicle on the basis of the information of the sensor apparatus.

For example, in patent document 1 (International Publication WO04/018273), as shown in Fig. 5, there is disclosed a vehicle control system 51 provided with an electronic control unit (ECU) 52 executing a cornering control (ESC), a wheel speed sensor 55 provided in each of a front wheel 53 and a rear wheel 54, a ground load sensor 56 provided in each of hub units 53a and 54a with sensors of the front wheel 53 and the rear wheel 54, a throttle opening degree sensor 57 and a throttle actuator 58 connected to the ECU 52 and adjusting a power of an engine, a master cylinder pressure sensor 60 and a brake actuator 61 connected to the ECU 52 and adjusting a braking force generated by the master cylinder 59, an acceleration sensor 62 detecting a vehicle body acceleration, a road surface $\mu$ sensor 63 measuring a friction coefficient of a road surface, and a steering angle sensor 64 measuring a steering angle,

Outputs of each of the wheel speed sensors 55, each of the ground load sensor 56, the acceleration sensor 62, the road surface $\mu$ sensor 63 and the steering angle sensor 64 are input to the ECU 52, whereby to the ECU 52, there are input a vehicle body speed from the wheel speed sensor 55 of the front wheel 53, respective ground loads of the front wheel 53 and the rear wheel 54 from the respective ground load sensors 56, a vehicle body acceleration from the acceleration sensor 62, a road surface friction coefficient from the road surface u sensor 63 and the like. Further, the ECU 52 can suppress an output of an engine by controlling the throttle actuator 58, and can suppress the speeds of the wheels 53 and 54 by controlling the master cylinder pressure sensor 60 and the brake actuator 61 so as to independently brake the wheels 53 and 54, respectively. Accordingly, it is possible to execute the control in correspondence to the vehicle body speed, the ground load of the wheels 53 and 54, a wheel tread and a pedaling operation of a driver.

In order to forecast a slip before the wheel slips, the ground load sensor 56 in the vehicle control system 51 mentioned above detects a load applied to the tire. Patent document 2 (Japanese Unexamined Patent Publication No. 2003-336652) discloses a matter that a hub unit load is determined by arranging a displacement sensor in a hub unit having a vehicle body side raceway member fixed to a vehicle body side, a wheel side raceway member to which the wheel is attached and two rows of rolling elements arranged between both the members, thereby intending to improve a vehicle control. Further, there has been known that a pressure sensor is used in place of the displacement sensor.

In the hub unit with the sensor disclosed in the patent document 2 mentioned above, the displacement sensor for detecting the load tends to be affected by an assembling precision and a material, and in the structure using the pressure sensor for detecting the load, it is necessary to adjust a preload, Accordingly, in both of them, there is a problem that a lot of labor hour is necessary for assembling.

SUMMARY OF THE INVENTION

An object of the present invention is to provide a load detecting sensor apparatus which can be easily assembled and can reduce a man hour, that is, a cost, and a rolling bearing apparatus with a sensor having the sensor apparatus.

The sensor apparatus in accordance with the invention is provided with an acceleration sensor detecting a lateral G, and a processing means for computing a load by using an output of the acceleration sensor,

A target in which the load is detected preferably employs a rolling bearing apparatus called as a hub unit corresponding to a constituting element of a motor vehicle or the like, for example. In this case, an acceleration sensor may use an acceleration sensor or a yaw rate sensor provided in the motor vehicle, and may be provided in each of the hub units of the vehicle.

A semiconductor type acceleration sensor is preferable as the acceleration sensor. The acceleration sensor may be structured such as to measure only in one axis (a lateral direction with respect to a forward moving direction of the vehicle = Y direction), however, it is more preferable that the acceleration sensor is constituted by an acceleration sensor which can measure in three axes (a forward moving direction of the vehicle = X direction, a lateral direction = Y direction and a vertical direction = Z direction).

It is preferable that the processing means determines a lateral load Fy, a vertical load Fz, and a moment Mx caused by the lateral load on the basis of the output G of the acceleration sensor in accordance with the following expression.

$$Fy = Mx \div a,$$

$$Fz = b \times G + c,$$

and

$$Mx = d \times G^2 + e \times G + f,$$

where a, b, c, d, e, and f respectively denote constants unique to a load detection target that is provided with the sensor apparatus.

In accordance with the present invention, there is provided a rolling bearing apparatus with a sensor including:

a rolling bearing apparatus having a vehicle body side raceway member fixed to a vehicle body side, a raceway member to which a wheel is attached, and rolling elements arranged between both of the raceway members; and
a sensor apparatus that determines a load applied to the rolling bearing apparatus, wherein
the sensor apparatus is provided with:

an acceleration sensor that detects a lateral G and is provided in the vehicle body side raceway member; and
a processing means for computing a load by using an output of the acceleration sensor,

It is preferable that the processing means determines a lateral load Fy, a vertical load Fz and a moment Mx caused by the lateral load on the basis of the output G of the acceleration sensor in accordance with the following expression.

$$Fy = Mx \div a,$$

$$Fz = b \times G + c,$$

and

$$Mx = d \times G^2 + e \times G + f,$$

where a, b, c, d, e, and f respectively denote constants unique to the rolling bearing apparatus.

The acceleration sensor provided in the motor vehicle is installed, for example, in a console box within a passenger room. In this case, since a transmission from a road surface is executed via a suspension, a time delay (about some tens millisecond) is generated, and a precision is deteriorated. On the contrary, in the case that the acceleration sensor is embedded in the rolling bearing apparatus (which may be called as "hub unit"), it is possible to directly measure an acceleration of an axle applied from the road surface (without being through the suspension), and it is possible to improve a detecting precision. Further, it is possible to reduce a number of parts by being embedded.

In this case, it is possible to detect a vehicle state such as getting over a step or the like, by arranging the acceleration sensor in all the hub units of four wheels.

Further, in the case that the acceleration sensor is constituted by the three-axis accelerometer, it is possible to detect the acceleration in all the directions of X, Y and Z directions, and it is possible to detect a turning condition by arranging the accelerometer in all of four wheels.

In accordance with the sensor apparatus of the present invention, since it is possible to obtain the load applied to the rolling bearing apparatus or the like only on the basis of the measurement by the accelerator sensor and the conversion expression, it is easy to assemble the sensor apparatus, and it is possible to reduce a man hour, that is, a cost, in comparison with the structure using the displacement sensor or the pressure sensor. Further, in the case that the subject in which the load is detected corresponds to the constituting element of the vehicle such as the hub unit, it is possible to omit the load measuring sensor provided in the hub unit, by determining the hub unit load by using the acceleration sensor provided in the vehicle.

In accordance with the rolling bearing apparatus with the sensor of the present invention, since it is possible to obtain the load applied to the rolling bearing apparatus only on the basis of the measurement by the acceleration sensor and the conversion expression, it is easy to assemble the sensor apparatus, and it is possible to reduce a man hour, that is, a cost, in comparison with the structure using the displacement sensor or the pressure sensor. Further, in the case that the rolling bearing apparatus corresponds to the constituting element of the vehicle such as the hub unit, it is possible to omit the acceleration sensor provided in the vehicle, by determining the acceleration applied to the vehicle in addition to the load applied to the rolling bearing apparatus by using the acceleration sensor provided in the rolling bearing apparatus.

## BRIEF DESCRIPTION OF THE DRAWINGS

Fig. 1 is a vertical cross sectional view showing an embodiment of a rolling bearing apparatus with a sensor in accordance with the present invention;

Fig. 2 is a side elevational view of a main portion of the rolling bearing apparatus with the sensor in accordance with the present invention;

Fig. 3 is a graph showing a relation between a lateral G, corresponding to an acceleration in a direction Y, and a load in a direction Z (Fz), a relation between the lateral G and a load in the direction Y (Fy), and a relation between the lateral G and a moment (Mx);

Fig. 4 is a block diagram showing a processing means of the rolling bearing apparatus with the sensor in accordance with the present invention; and

Fig. 5 is a block diagram showing one example of a conventional vehicle control system.

## DETAILED DESCRIPTION OF PREFERABLE CONCRETE EMBODIMENT

A description will be given below of an embodiment in accordance with the present invention with reference to the accompanying drawings.

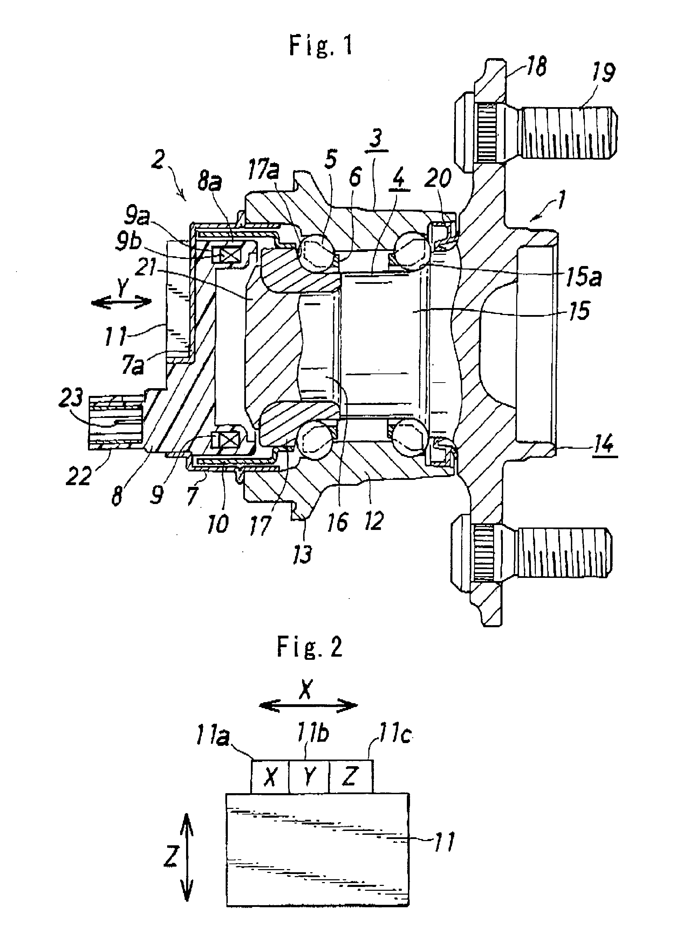

Figs. 1 and 2 show one embodiment of a rolling bearing apparatus 1 with a sensor in accordance with the present invention. In the following description, it is assumed that right and left mean right and left in Fig. 1. In this case, a lateral direction corresponds to a direction Y, the left corresponds to an inner side of a vehicle and the right corresponds to an outer side of the vehicle.

The rolling bearing apparatus with the sensor is provided with a hub unit 1 serving as a rolling bearing apparatus, and a sensor apparatus 2 detecting a rotation of the hub unit, a hub unit load and the like.

The hub unit 1 is provided with a vehicle body side raceway member 3 fixed to a vehicle body side, a wheel side raceway member 4 to which a wheel is attached, a plurality of bells 5 corresponding to a plurality of rolling elements arranged in two rows between, both the members 3 and 4 , and a cage 6 holding the balls 5 in each of the rows.

The vehicle body side raceway member 3 has a cylinder portion 12 in which two rows of outer ring raceways are formed in an inner peripheral surface, and a flange portion 13 provided near a left end portion of the cylinder portion 12 and attached to a suspension apparatus (a vehicle body) by bolts.

The wheel side raceway member 4 is constituted by an inner shaft 14 having a large-diameter portion 15 including a first raceway groove 15a and a small-diameter portion 16 including a smaller outer diameter than a diameter of the first raceway groove 15a, and an inner ring 17 fitted to an outer diameter of the small-diameter portion 16 of the inner shaft 14 and having a right surface brought into close contact with a left surface of the large-diameter portion 15 of the inner shaft 14. A flange portion 18 is provided near a right end of the inner shaft 14. A plurality of bolts 19 for attaching the wheel are fixed to the flange portion 18. A raceway groove 17a is formed in a right portion of the inner ring 17 in such a manner as to stand in a line with the raceway groove 15a of the inner shaft 14. A seal apparatus 20 is provided between a right end portion of the vehicle body side raceway member 3 and the inner shaft 14.

An annular inner ring fixing caulking portion 21 is provided in a left end surface (an inner end surface in an axial direction) 16a of the small-diameter portion 16 of the inner shaft 14, and a left and portion of the inner ring fixing caulking portion 21 is caulked to an outer side in a diametrical direction so as to press the inner ring 17 to a right side (an outer side in the axial direction), whereby the inner ring 17 is fixed to the inner shaft 14.

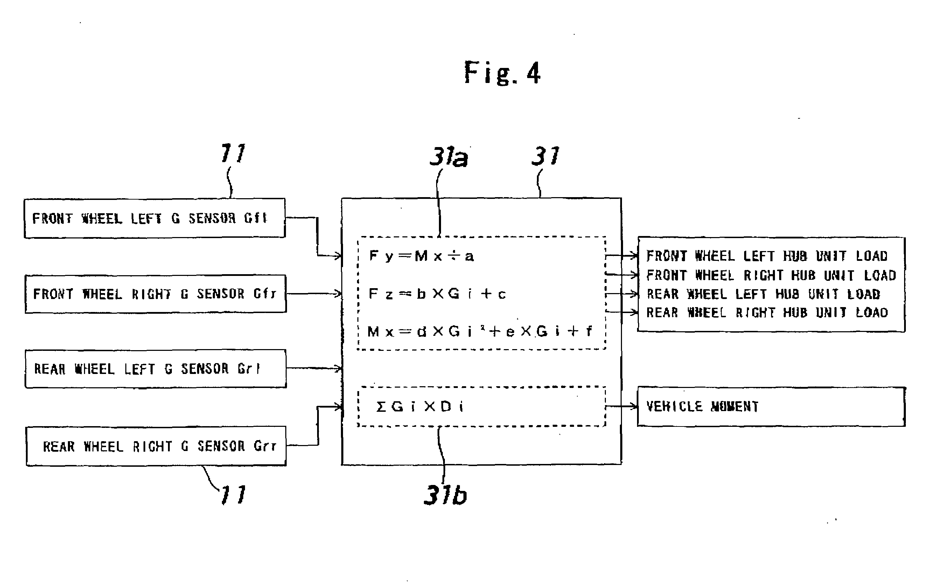

The sensor apparatus 2 has an annular cored bar 7 fitted to an inner diameter of a left end portion (an inner end portion in an axial direction) of the vehicle body side raceway member 3, a sensor fixing resin 8 integrally formed with the cored bar 7, a wheel speed detecting sensor 9 provided within the resin 8, a pulsar ring 10 fixed to the inner ring 17 of the wheel side raceway member 4 in such a manner as to face to the wheel speed detecting sensor 9 from an outer side in a diametrical direction, an acceleration sensor (hexeinafter, refer to as "G sensor") 11 fixed to the cored bar 7, and a processing means 31 (refer to Fig. 4) processing the output of each of the sensors 9 and 11.

The sensor fixing resin 8 has a rightward protruding annular protruding portion 8a in which an outer peripheral surface is formed in such a manner as to be positioned in an inner side in a diametrical direction of the pulsar ring 10 at a slight gap, and the wheel speed detecting sensor 9 is fixed to the annular protruding portion 8a. A connector portion 22 for attaching a harness connecting the .processing means provided in the vehicle body side and the sensor apparatus 2 is integrally formed in a left surface of the sensor fixing resin 8 so as to protrude to a left side. A connector pin 23 for a signal is provided in the Connector portion 22, and the vehicle speed detecting sensor 9 and the connector pin 23 are connected via a lead wire (not shown).

The wheel speed detecting sensor 9 is formed by combining an annular permanent magnet 9a and an annular coil 9b, and this structure is known. It is possible to detect a rotational speed of the inner ring 17 and accordingly a rotational information such as the wheel speed or the like by detecting a change of a magnetic flux density caused by the rotation of the pulsar ring 10.

The G sensor 11 is attached to a support portion 7a provided in the cored bar 7 and having an L-shaped cross section. The G sensor 11 corresponds to a three-axis accelerometer, and is constituted by a sensor 11a for detecting an acceleration in a direction X, a sensor 11b for detecting an acceleration in a direction Y and a sensor 11c for detecting an acceleration in a direction Z, as shown in Fig. 2, and these sensors are arranged in such a manner as to detect the acceleration in the respective directions. In this case, the direction X and the direction Z are shown with arrows in Fig. 2, and the direction Y is shown with an arrow in Fig. 1.

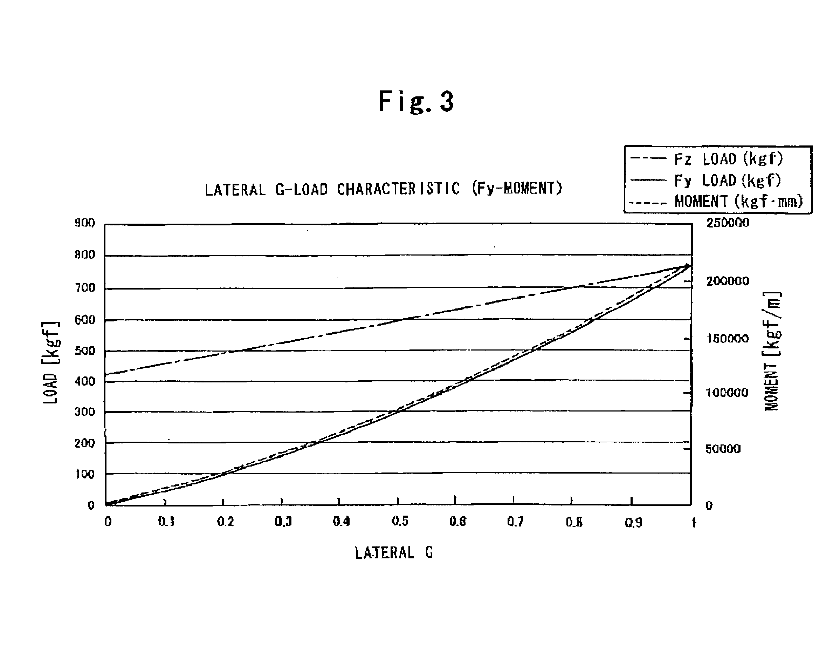

Fig. 3 shows a relation between a lateral G corresponding to an acceleration in the direction Y, and a load in the direction Z (Fz) and a load in the direction Y (Fy), and a relation between the lateral G and a moment (Mx) . In accordance with this graph, it is understood that if the lateral G can be detected, it is possible to convert into the load in the direction Z (Fz), the load in the direction Y (Fy) and the moment (Mx) by using the lateral G. Specifically, it is possible to determine Fz, Fy and Mx by using the following relations.

$$Fy = Mx \div a \qquad (1)$$

$$Fz = b \times G + c \qquad (2)$$

$$Mx = d \times G^2 + e \times G + f \qquad (3)$$

In the above description a, b, c, d, e, and f respectively denote constants unique to the vehicle, that is, the hub unit. The relation shown in Fig. 3 is established in various hub units, and Fx, Fy, and Mx can be determined in accordance with the expressions (1) to (3) mentioned above, by determining the values a, b, c, d, e, and f in correspondence to the hub unit.

Fig. 4 shows a processing means 31 of the rolling bearing apparatus with the sensor in accordance with the present invention. The G sensor 11 is attached to each of four hub units 1 provided in the vehicle, and these sensors are called as a front wheel left G sensor Gfl, a front wheel right G sensor Gfr, a rear wheel left G sensor Grl and a rear wheel right G sensor Grr.

The expressions (1) to (3) mentioned above are stored in a hub unit load computing portion 31a of the processing means 31. Accordingly, it is possible to determine front wheel left, front wheel right, rear wheel left and rear wheel right hub unit loads (at least Fz and Fy) by using outputs from the G sensors Gfl, Grr, Grl, and Grr, respectively.

Further, an expression ΣGi x Di is stored in a vehicle moment computing portion 31b of the processing means 31. The expression ΣGi x Di determines a moment applied to the vehicle by using outputs Gi of the respective G sensors Gfl, Gfr, Gr 1 , and Grr and distances Di from the center of the vehicle to the respective G sensors Gfl, Gfr, Grl, and Grr and adding them as a moment. Accordingly, it is possible to determine the vehicle moment detected by the G sensor conventionally provided in the vehicle, by using the outputs of all the G sensors Gfl, Gfr, Grl, and Grr.

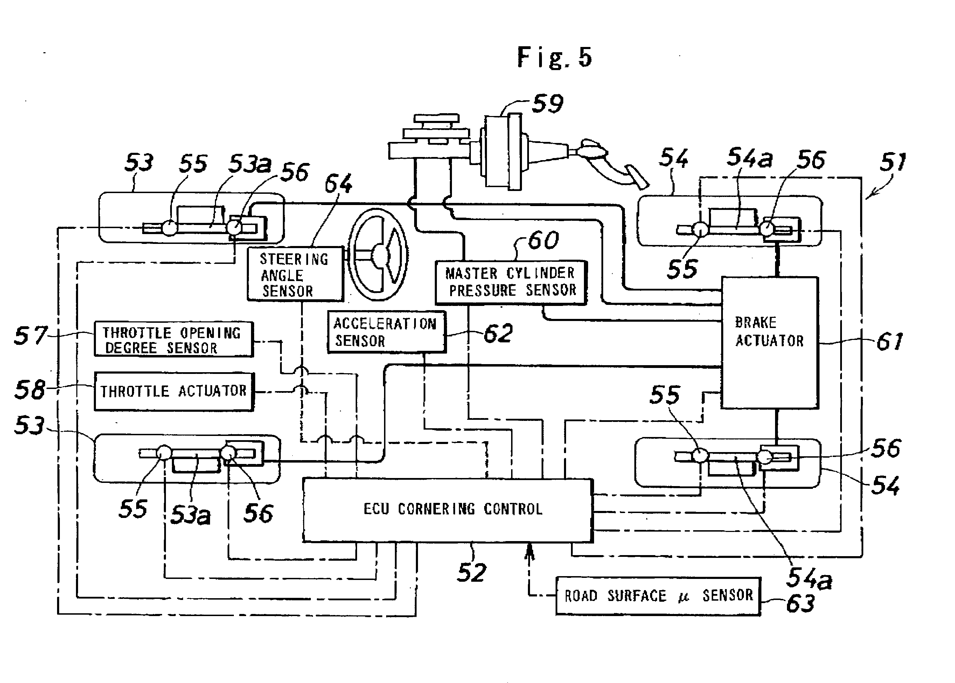

The expressions (1) to (3) mentioned above can be also determined by using the output of the G sensor = the acceleration sensor 62 in Fig. 5 installed in the console box within the passenger room. Further, it is also possible to determine the front wheel left, front wheel right, rear wheel left and rear wheel right hub unit loads by the sensor apparatus provided with the acceleration sensor provided in the vehicle and detecting the lateral G, and the processing means (reference numeral 31 in Fig. 4) computing the load by using the output of the acceleration sensor.

**Claims**

1. A sensor apparatus comprising:

   an acceleration sensor detecting a lateral G; and
   a processing means for computing a load by using an output of the acceleration sensor.

2. A sensor apparatus as claimed in claim 1, wherein
   the processing means determines a lateral load Fy, a vertical load Fz, and a moment Mx caused by the lateral load, on the basis of the output G of the acceleration sensor in accordance with the following expression:

$$Fy = Mx \div a,$$

$$Fz = b \times G + c,$$

and

$$Mx = d \times G^2 + e \times G + f,$$

   where a, b, c, d, e, and f respectively denote constants unique to a load detection target that is provided with the sensor apparatus.

3. A sensor apparatus as claimed in claim 2, wherein an acceleration sensor provided in a motor vehicle is used as the acceleration sensor.

4. A sensor apparatus as claimed in claim 2, wherein a yaw rate sensor provided in a motor vehicle is used as the acceleration sensor.

5. A rolling bearing apparatus with a sensor comprising:

   a rolling bearing apparatus having a vehicle body side raceway member fixed to a vehicle body side, a raceway member to which a wheel is attached, and rolling elements arranged between both of the raceway members; and
   a sensor apparatus that determines a load applied to the rolling bearing apparatus, 4rherein
   the sensor apparatus comprises:

   an acceleration sensor that detects a lateral G and is provided in the vehicle body side raceway member; and
   a processing means for computing a load by using an output of the acceleration sensor.

6. A rolling bearing apparatus with a sensor as claimed in claim 5, wherein
   the processing means determines a lateral load Fy, a vertical load Fz, and a moment Mx caused by the lateral load on the basis of the output G of the acceleration sensor in accordance with the following expression:

$$Fy = Mx \div a,$$

$$Fz = b \times G + c,$$

and

$$Mx = d \times G^2 + e \times G + f,$$

where a, b, c, d, e, and f respectively denote constants unique to the rolling bearing apparatus.

7.  A rolling bearing apparatus with a sensor as claimed in claim 6, wherein the acceleration sensor is constituted by a semiconductor type acceleration sensor.

8.  A rolling bearing apparatus with a sensor as claimed in claim 6, wherein the acceleration sensor is configured to measure only in one axis, and measures an acceleration in a lateral direction with respect to a forward moving direction of the vehicle.

9.  A rolling bearing apparatus with a sensor as claimed in claim 6, wherein the acceleration sensor is capable of measuring in three axes.

# Fig. 1

# Fig. 2

# Fig. 3

LATERAL G-LOAD CHARACTERISTIC (Fy-MOMENT)

Legend:
- ---·--- Fz LOAD (kgf)
- ——— Fy LOAD (kgf)
- ------ MOMENT (kgf·mm)

LATERAL G

EP 1 710 588 A2

## Fig. 4

| | 11 | | 31a | 31 | |
|---|---|---|---|---|---|

FRONT WHEEL LEFT G SENSOR Gfl

FRONT WHEEL RIGHT G SENSOR Gfr

REAR WHEEL LEFT G SENSOR Grl

REAR WHEEL RIGHT G SENSOR Grr

11

$$F_y = M_x \div a$$

$$F_z = b \times G_i + c$$

$$M_x = d \times G_i^2 + e \times G_i + f$$

$$\Sigma G_i \times D_i$$

31b

FRONT WHEEL LEFT HUB UNIT LOAD
FRONT WHEEL RIGHT HUB UNIT LOAD
REAR WHEEL LEFT HUB UNIT LOAD
REAR WHEEL RIGHT HUB UNIT LOAD

VEHICLE MOMENT

Fig.5

BRAKE ACTUATOR

MASTER CYLINDER PRESSURE SENSOR

ACCELERATION SENSOR

STEERING ANGLE SENSOR

THROTTLE OPENING DEGREE SENSOR

THROTTLE ACTUATOR

ECU CORNERING CONTROL

ROAD SURFACE μ SENSOR

**EP 1 710 588 A2**

**Patent documents cited in the description**

- WO 04018273 A

- JP 2003336652 A